# EUROPEAN PATENT SPECIFICATION

(11) **EP 1 258 158 B1**
(45) Date of publication and mention of the grant of the patent: **24.06.2009**
(21) Application number: 01902936.2
(22) Date of filing: 31.01.2001
(51) Int. Cl.: H04W 12/06

(54) **AUTHENTICATION OF PERSONS IN A COMMUNICATION SYSTEM**
AUTHENTISIERUNG VON PERSONEN IN EINEM KOMMUNIKATIONSSYSTEM
IDENTIFICATION DES PERSONNES DANS UN SYSTEME DE COMMUNICATIONS

(30) Priority: 04.02.2000 SE 0000357
(43) Date of publication of application: 20.11.2002
(73) Proprietor: TELIASONERA AB, 106 63 Stockholm (SE)
(72) Inventor: ANDERSIN, Mikael, S-118 64 Stockholm (SE); EMILSSON, Stellan, S-655 94 Karlstad (SE); BLOMKVIST, H kan, S-653 50 Karlstad (SE); GUSTAFSSON, Jan, S-653 30 Karlstad (SE); ERIKSSON, Jonas, S-652 22 Karlstad (SE)
(74) Representative: Hopfgarten, Nils
(86) International application number: PCT/SE2001/000187
(87) International publication number: WO 2001/058200

(56) References cited:
- EP-A2- 0 827 356
- WO-A1-97/45814
- WO-A1-97/45981
- WO-A1-98/12891
- WO-A2-99/03285
- DE-A1- 19 716 111
- US-A- 5 491 750

## Description

### Technical field

The present invention relates to a procedure for mutual authentication of persons at communication between a first person and a second person and to a corresponding arrangement for authentication, said persons communicating with each other via a respective communication device over a communication system.

### Background

A method for mutual authentication of components in a network is described in WO 99/03285. The network then requests a set of data values from an authentication centre and transmits at least one set of data values to the mobile station, which on the basis of an internally stored key calculates a response from this set of data values and transmits it to the network. To authenticate the network in relation to the mobile station the response is sent back to the network to be interpreted simultaneously by the network and for the network immediately to transmit a response to the mobile station.

In many situations it is of great value to have possibility to check the identity of the person with whom one is communicating. Examples of occasions when authentication person to person would be advantageous are at payment transactions, when a person shall be admitted through a gateway, or when a confidential talk is to begin with an unknown opposite party. One problem with authentication of a person in a mobile telephone system is that the technology which is used must be independent of where the in the call included persons are. Another problem is to effect authentication person to person without advanced additions to the mobile telephones of the parties being needed, such as SIMAT, WAP or that the mobile telephones are connected to PDAs.

### Summary of the invention

In order to overcome above mentioned problems, the present invention consequently relates to a procedure for authentication of person at communication between a first person and a second person, including the steps that, when a mutual authentication person to person is wanted, one of the persons transmits a request for authentication to the authentication server, the persons identify themselves to the authentication server by means of personal codes and/or voice signatures, an authentication server generates two codes, that both codes are transmitted both to the first person and to the second person, that the first person reads aloud one of the codes to the second person, and that the second person reads aloud to the first person, whereupon the communicating persons authenticate each other by comparing the code that has been read aloud to them with corresponding transmitted code.

In one embodiment said identification includes information about where the codes shall be transmitted to reach the second person. In another embodiment said identification is used by the authentication server to produce information about where the codes shall be transmitted to reach the second person.

Said codes are preferably transmitted to the communication device of a respective person. In one embodiment said codes are transmitted in the form of a text message, and are shown on a display device at the communication device. In another embodiment, said codes are transmitted in the form of a data sequence which represents a coded sound message, which sound message is played back in a loudspeaker at the communication device.

In one preferred embodiment said persons must, before the codes are transmitted to them, identify themselves to, and be acknowledged by, the authentication server. In one embodiment said persons identify themselves to the authentication server by transmitting a personal code, which preferably is transmitted as a text message. In another embodiment said personal code is pronounced by the person via his/her communication device, and is detected by a speech recognition device in cooperation with the authentication server. In yet another embodiment the authentication server identifies said persons by a voice recognition device arranged in cooperation with the authentication server.

Said communication devices are preferably mobile telephones, at which the codes are transmitted over a mobile telephone system to said mobile telephones, by means of which mobile telephones said persons communicate.

Further, the present invention relates to an arrangement for authentication of persons at communication between a first person and a second person, said persons communicating with each other via a respective communication device over a communication system. The arrangement is characterized by an authentication server arranged in the communication system, which authentication server includes an input port arranged to from one of said persons receive a request for authentication including an identification of said persons. The authentication server is arranged to check the person's identities by means of personal codes and/or voice signatures. A code generator in connection with said input port is arranged to, in response to a received authentication request, generate two codes, and distribution devices in connection with an output port are arranged to via said communication system transmit both said codes to both said communication devices, said communicating persons authenticating each other by comparing a code read aloud to them with corresponding code transmitted to their communication devices.

In one embodiment said authentication request includes an identification of the addresses of said communication devices. In another embodiment said authentication server is preferably connected to a storing device, said storing device storing identifications of the persons together with respective person's associate communication addresses, and the authentication server further includes means arranged to, in response to a received authentication request, select a communication address from the storing device depending on received identification.

Said code generator is preferably a random number generator. In one embodiment said authentication server is arranged to transmit said codes as text messages, and said communication devices include presentation/display devices arranged to present/show received codes. In another embodiment said authentication server is arranged to transmit said codes as data sequences representing a coded sound message, and said communication devices include devices to convert said data sequences to sound, and a loudspeaker is arranged to play back the sound message.

In one preferred embodiment said authentication server includes code recognition devices, adapted to detect a personal code given and transmitted to the authentication server by a person with his/her communication device, and devices arranged to identify persons by means of the personal code from a storing device which is connected to the authentication server. In one embodiment said code recognition devices are arranged to detect personal codes in form of text messages. In another embodiment said code recognition device includes speech recognition devices arranged to detect a pronounced personal code. Alternatively, the speech recognition device can be incorporated in the communication device.

In one preferred embodiment said authentication server includes voice recognition devices adapted to identify a person on basis of his/her voice.

Preferably, said communication devices are mobile telephones, said communication system being a mobile telephone system.

### Brief description of the drawings

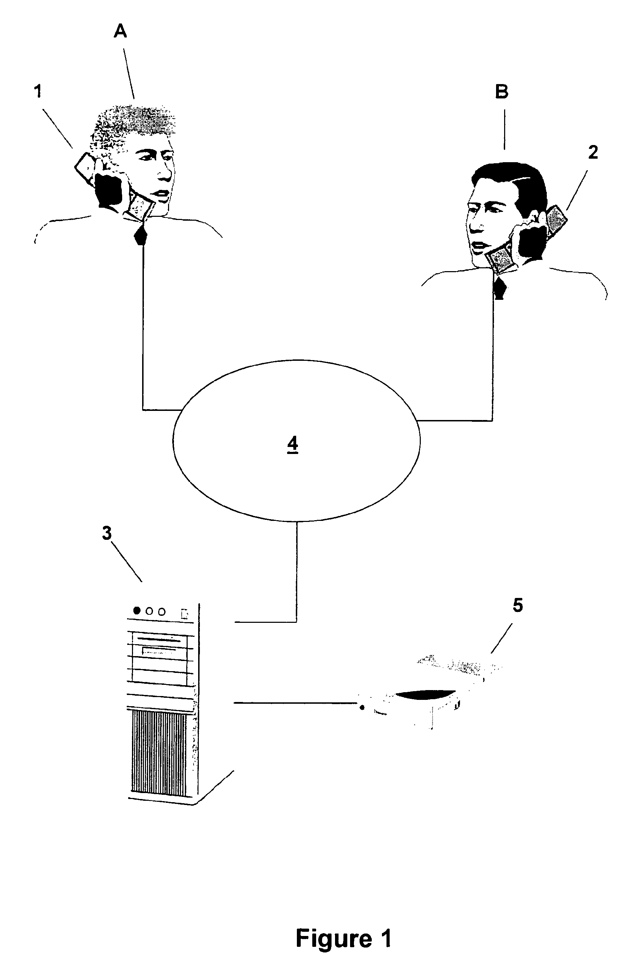

Preferred embodiments of the present invention are described below in detail, with reference to the only figure, where
Figure 1 shows an embodiment of the arrangement according to the present invention.

### Detailed description of preferred embodiments

The invention is based on that an uninvolved, trustworthy party C via an authentication server 3 distributes two unique codes X and Y to the two persons A and B, which are, or want to be, set up in a communication connection with each other. The invention preferably relates to authentication between persons who communicate with each other with mobile telephones 1 and 2 over a mobile telephone system 4, but can also be applied to other types of communication, such as ordinary telephony by cable, or communication over data communication network, for instance Internet. According to the invention, person A then reads aloud for instance code X to the opposite party B, whereas B reads the code Y aloud to A. Person A then compares the code Y, which the person B has read aloud, with the code Y which A has received from the authentication server, whereas person B compares the code X the person A has read aloud, with the code X which B has received from the authentication server 3. In this way a mutual authentication person to person is achieved.

In Figure 1 is shown an embodiment of the arrangement according to the present invention. The first person A talks in his/her mobile telephone 1 with the second person B, via his/her mobile telephone 2, over a mobile telephone system 4. To the mobile telephone system 4 an authentication server 3 is connected via an input port, which authentication server 3 belongs to one for the persons A and B independent party C. When a mutual authentication person to person is wanted, one of the persons, for instance A, gets into contact with the authentication server 3 and transmits a request for authentication. This can be made before or after set up of the call with the person B.

The authentication server 3 is arranged to manage A-numbers, and consequently knows who has initiated the contact. The authentication server, however, must also knows who the opposite party B is, so the person A encloses this data. In one embodiment this is made by the person A quite simply enclosing the number to the person B's mobile telephone 2, i.e. the B-number, to the authentication server 3. In another embodiment the person A instead transmits some form of identification for B to the authentication server 3, for instance name, civic registration number, organization number or the like. In such an embodiment the authentication server 3 is arranged in connection with a database 5, from which the authentication server 3 can derive stored information about the person B's mobile telephone number, by using a transmitted identification as input data.

The authentication server 3 includes code generation devices, preferably a random number generator, arranged to in reaction to a received authentication request generate two codes X and Y. Further, the authentication server 3 is equipped with a distribution device, arranged to transmit both the two codes X and Y, both to said A-number and B-number. By the communicating parties A and B receiving the same codes, they then can authenticate each other by each reading aloud a part, X or Y, of the code pair to each other. Thus authentication is achieved person to person without advanced additions to the communication devices, i.e. the mobile telephones 1 and 2, being needed. Preferably are the codes X and Y transferred as simple text messages, for instance SMS, and shown on the display of respective mobile telephone 1 and 2. Also authentication request is preferably a text message. In a simple case the authentication request consists of a B-number which is transmitted to the authentication server 3 by the authentication server 3 being called. As reaction to that call, the authentication server 3 generates two codes X and Y, and transmits them to the A-number from which the authentication request was transmitted, and the enclosed B-number.

In one embodiment the authentication server is arranged for communication with voice commands, so that authentication request can be pronounced in the microphone cf the mobile telephone, and the codes X and Y can be played back in the loudspeaker of the mobile telephone. Either the authentication server 3 or the mobile telephone 1 respective 2 is in this embodiment arranged with a speech recognition device, whereas the mobile telephones 1 respective 2 include devices for play back of a received message with a synthetic voice.

In one embodiment is to the communicating parties A and B also transmitted information about the parties A and B which is stored in the database 5, i.e. name or the like as above, together with the codes X and Y.

In a preferred embodiment of the arrangement according to the invention, the parties A and B are known in advance by the independent party C, and have to identify themselves to the authentication server 3 before the codes X and Y can be distributed. This identification can for instance be made by a personal code for respective A and B being entered on respective person's mobile telephone 1 and 2, and being transmitted to the authentication server 3. The authentication server 3 includes means to detect the transmitted personal code, and means to check its authenticity. Preferably is the authentication server 3 internally or externally connected to a database 5, in which the identification of the communicating parties are stored, for instance in form of a digital certificate, as well as their personal codes. The personal code can be a simple combination of digits in known way, which is transmitted to the authentication server 3 as a text message as above. The code can also be a voice signature, at which the authentication server includes a voice recognition device arranged to detect a spoken voice, and to find the person's identification and/or mobile telephone number in the database 5 with his/her voice signature as input data. In one embodiment is required that both parties A and B are identified by the authentication server 3 before the codes X and Y are distributed.

The invention consequently describes a general form of mutual authentication between persons, preferably mobile telephone subscribers. The invention can for instance be utilized in combination with a pay system, at which the technology offers a way to buyers and sellers to verify the identity of the opposite party. The invention can also be used when one, at a normal call, wants to be sure that the person one is talking with is the right person. Today there exist methods for authentication towards a central server. The invention instead describes a technology for authentication person to person, and which does not make any specific demands upon the terminals 1 and 2. For the realization via a mobile telephone system 4 it is sufficient with an ordinary GSM-telephone with capacity to transmit and receive SMS. The expert, however, realizes that the invention also can be realized in other types of communication systems 4, with to them belonging communication devices 1 and 2. One example is communication over Internet 4 between data communication terminals 1 and 2, for instance PC, at which the equivalence of the A-number and the B-number is the IP-address. Another example is communication between ordinary telephones by wire. The invention is only limited by the enclosed patent claims.

## Claims

1. Procedure for authentication of persons at communication between a first person (A) and a second person (B), including the steps that:
- when a mutual authentication person to person is wanted one (A) of the persons transmits a request for authentication to the authentication server (3), said request for authentication including an identification of the second person (B);
- the persons (A, B) identify themselves to the authentication server (3) by means of personal codes and/or voice signatures
- an authentication server (3) generates two codes (X;Y) in response to a proper identification, by the authentication server, of the two persons indicated in said request for authentication previously received by the authentication server;
- both codes (X,Y) are transmitted to the first person (A) and to the second person (B);
- the first person (A) reads aloud one of the codes (X) to the second person (B), and the second person (B) reads aloud the other code (Y) to the first person (A);
- the communicating persons (A, B) authenticate each other by comparing the code that has been read aloud to them with corresponding transmitted code.

2. Procedure as claimed in claim 1, wherein said identification includes information about where (2) the codes (X, Y) shall be transmitted to reach the second person (B).

3. Procedure as claimed in claim 3, wherein said identification is used by the authentication server (3) to produce information about where (2) the codes (X, Y) shall be transmitted to reach the second person.

4. Procedure as claimed in any of the previous claims, wherein said codes (X, Y) are transmitted to the respective person's (A, B) communication device (1, 2).

5. Procedure as claimed in claim 4, wherein said codes (X, Y) are transmitted in the form of a text message, and are presented/shown on a display device at the communication device (1, 2).

6. Procedure as claimed in claim 4, wherein said codes (X, Y) are transmitted in the form of a data sequence which represents a coded sound message, which sound message is played back in a loudspeaker at the communication device (1, 2).

7. Procedure as claimed in any of the previous claims, wherein said persons (A, B), before the codes (X, Y) are transmitted to them, must identify themselves to the authentication server (3), and be acknowledged by the authentication server (3).

8. Procedure as claimed in claim 7, wherein said persons (A, B) identify themselves to the authentication server (3) by transmitting a code.

9. Procedure as claimed in claim 8, wherein said code is transmitted as a text message.

10. Procedure as claimed in claim 8, wherein said code (X, Y) is pronounced by the person (A, B) with his/her communication device (1, 2) and is detected by a speech recognition device in cooperation with the authentication server (3).

11. Procedure as claimed in claim 7, wherein a voice recognition device in cooperation with the authentication server (3) identifies said persons (A, B).

12. Procedure as claimed in any of the previous claims, wherein said communication devices (1, 2) are mobile telephones, said codes being transmitted over a mobile telephone system (4) to said mobile telephones (1, 2) by means of which said persons (A, B) communicate.

13. Arrangement for authentication of persons at communication between a first person (A) and a second person (B), said persons communicating with each other via a respective communication device (1, 2) over a communication system (4), **characterized by** an authentication server (3) arranged in the communication system, which authentication server includes an input port arranged to, from one (A) of said persons, receive a request for authentication including an identification of said persons (A, B), the authentication server (3) being arranged to check the persons' (A, B) identities by means of personal codes and/or voice signatures, a code generator in connection with said input port, arranged to, in response to a received authentication request, generate two codes (X, Y), and by distribution devices in connection with an output port, arranged to, via said communication system (4), transmit both of said codes (X, Y) to both of said communication devices (1, 2), said communicating persons (A, B) authenticating each other by comparing a code read aloud to them with corresponding code transmitted to their communication devices (1, 2).

14. Arrangement as claimed in claim 13, wherein said request for authentication includes an identification of the addresses of said communication device (1, 2).

15. Arrangement as claimed in claim 13, wherein said authentication server (3) is connected to a storing device (5), said storing device storing identifications of the persons together with associated communication addresses of the respective persons, and wherein the authentication server (3) further includes means arranged to, in response to a received request for authentication, select a communication address from the storing device (5) depending on received identification.

16. Arrangement as claimed in any of the claim 13 - 15, wherein said code generator is a random number generator arranged to generate random number codes.

17. Arrangement as claimed in claim 16, wherein said authentication server is arranged to transmit said codes (X, Y) as text messages, and said communication devices (1, 2) include display devices arranged to display received codes (X, Y).

18. Arrangement as claimed in claim 16, wherein said authentication server is arranged to transmit said codes (X, Y) as data sequences representing a coded sound message, and where said communication devices (1, 2) include devices to convert said data sequences to sound, and a loudspeaker is arranged to play back the sound message.

19. Arrangement as claimed in any of the claims 13 - 18, wherein said authentication server (3) includes code recognition devices, adapted to detect a personal code given and transmitted to the authentication server (3) by a person (A, B) with his/her communication device (1, 2), and devices, arranged to, from said storing device (5) connected to the authentication server (3), derive an identification for the person by means of his/her personal code.

20. Arrangement as claimed in claim 19, wherein said code recognition device is arranged to detect personal codes in the form of text message.

21. Arrangement as claimed in claim 19, wherein said code recognition device includes speech recognition devices arranged to detect a pronounced personal code.

22. Arrangement as claimed in claim 19, wherein said communication devices (1, 2) include speech recognition devices arranged to detect a pronounced personal code.

23. Arrangement as claimed in any of the claims 13 - 18, wherein said authentication server (3) includes voice recognition devices, adapted to identify a person (A, B) on the basis of his/her voice.

24. Arrangement as claimed in any of the claims 13 - 23, wherein said communication devices (1, 2) are mobile telephones, said display devices being displays.

## Patentansprüche

1. Verfahren zur Authentifizierung von Personen bei der Kommunikation zwischen einer ersten Person (A) und einer zweiten Person (B), das die Schritte einschließt, dass:
- wenn eine gegenseitige Authentifizierung von Person zu Person gewünscht ist, eine (A) der Personen eine Anforderung von Authentifizierung zu dem Authentifizierungsserver (3) überträgt, welche Anforderung von Authentifizierung eine Identifizierung der zweiten Person (B) einschließt;
- die Personen (A, B) sich selbst zum Authentifizierungsserver (3) mit Hilfe von persönlichen Codes und/oder Sprachsignaturen identifizieren,
- ein Authentifizierungsserver (3) zwei Codes (X; Y) als Reaktion auf eine richtige Identifizierung durch den Identifizierungsserver der beiden Personen erzeugt, die in der Anforderung von Authentifizierung bezeichnet sind, die vorher durch den Authentifizierungsserver empfangen ist;
- beide Codes (X, Y) zur ersten Person (A) und zur zweiten Person (B) übertragen werden;
- die erste Person (A) laut einen der Codes (X) der zweiten Person (B) vorliest, und die zweite Person (B) den anderen Code (Y) der ersten Person (A) vorliest;
- die kommunizierenden Personen (A, B) einander authentifizieren, indem sie den Code, der ihnen laut vorgelesen worden ist, mit einem entsprechenden übertragenen Code vergleichen.

2. Verfahren nach Anspruch 1, bei dem die Identifizierung Informationen darüber einschließt, wo (2) die Codes (X, Y) übertragen werden sollen, um die zweite Person (B) zu erreichen.

3. Verfahren nach Anspruch 3, bei dem die Identifizierung durch den Authentifizierungsserver (3) verwendet wird, Informationen darüber zu erzeugen, wo (2) die Codes (X, Y) übertragen werden sollen, um die zweite Person zu erreichen.

4. Verfahren nach einem der vorangehenden Ansprüche, bei dem die Codes (X, Y) zu der Kommunikationseinrichtung (1, 2) der entsprechenden Personen (A, B) übertragen werden.

5. Verfahren nach Anspruch 4, bei dem die Codes (X, Y) in Form einer Textmeldung übertragen werden und auf einer Anzeigeeinrichtung an der Kommunikationseinrichtung (1, 2) dargeboten/gezeigt werden.

6. Verfahren nach Anspruch 4, bei dem die Codes (X, Y) in Form einer Datensequenz übertragen werden, die eine kodierte Tonmeldung darstellt, welche Tonmeldung in einen Lautsprecher bei der Kommunikationseinrichtung (1, 2) abgespielt wird.

7. Verfahren nach einem der vorangehenden Ansprüche, bei dem die Personen (A, B), bevor die Codes (X, Y) zu ihnen übertragen werden, sich selbst beim Authentifizierungsserver (3) identifizieren und durch den Authentifizierungsserver (3) bestätigt werden müssen.

8. Verfahren nach Anspruch 7, bei dem die Personen (A, B) sich selbst beim Authentifizierungsserver (3) durch Übertragen eines Codes identifizieren,

9. Verfahren nach Anspruch 8, bei dem der Code als eine Textmeldung übertragen wird.

10. Verfahren nach Anspruch 8, bei dem der Code (X, Y) durch die Person (A, B) mit seiner/ihrer Kommunikationseinrichtung (1, 2) ausgesprochen wird und durch eine Spracherkennungseinrichtung in Zusammenwirken mit dem Authentifizierungsserver (3) delektiert wird.

11. Verfahren nach Anspruch 7, bei der die Sprachenerkennungseinrichtung in Zusammenwirken mit dem Authentifizierungsserver (3) die Personen (A, B) identifiziert.

12. Verfahren nach einem der vorangehenden Ansprüche, bei dem die Kommunikationseinrichtungen (1, 2) mobile Telefone sind und die Codes über ein Mobiltelefonsystem (4) zu den mobilen Telefonen (1, 2) übertragen werden, mit Hilfe derer die Personen (A, B) kommunizieren.

13. Anordnung für Authentifizierung einer Person bei Kommunikation zwischen einer ersten Person (A) und einer zweiten Person (B), welche Personen miteinander über eine entsprechende Kommunikationseinrichtung (1, 2) über ein Kommunikationssystem (4) kommunizieren, **gekennzeichnet durch** einen Authentifizierungsserver (3), der in dem Kommunikationssystem angeordnet ist, welcher Authentifizierungsserver einen Eingangsanschluss einschließt, der dazu ausgebildet ist, von einer (A) der Personen eine Anforderung von Authentifizierung einschließlich einer Identifizierung der Personen (A, B) zu empfangen, wobei der Authentifizierungsserver (3) dazu ausgebildet ist, die Identitäten der Personen (A, B) mit Hilfe von persönlichen Codes und/oder Sprachsignaturen zu prüfen, **durch** einen Codegenerator in Verbindung mit dem Eingangsanschluss, der dazu ausgebildet ist, als Reaktion auf eine empfangene Authentifizierungsanforderung zwei Codes (X, Y) zu erzeugen, und **durch** Verteilungseinrichtungen in Verbindung mit einem Ausgangsanschluss, die dazu ausgebildet sind, über das Kommunikationssystem (4) beide Codes (X, Y) zu beiden Kommunikationseinrichtungen (1, 2) zu übertragen, welche kommunizierenden Personen (A, B) einander **dadurch** authentifizieren, dass sie einen Code, der ihnen laut vorgelesen wird, mit einem entsprechenden Code vergleichen, der zu ihren Kommunikationseinrichtungen (1, 2) übertragen wird.

14. Anordnung nach Anspruch 13, bei der die Anforderung für Authentifizierung eine Identifizierung der Adressen der Kommunikationseinrichtung (1, 2) einschließt.

15. Anordnung nach Anspruch 13, bei der der Authentifizierungsserver (3) mit einer Speichereinrichtung (5) verbunden ist, welche Speichereinrichtung Identifizierungen der Personen zusammen mit zugeordneten Kommunikationsadressen der entsprechenden Personen speichert, und wobei der Authentifizierungsserver (3) weiter Mittel einschließt, die dazu ausgebildet sind, als Reaktion auf eine empfangene Anforderung von Authentifizierung eine Kommunikationsadresse von der Speichereinrichtung (5) in Abhängigkeit von der empfangenen Identifizierung auszuwählen.

16. Anordnung nach einem der Ansprüche 13 bis 15, bei der der Codegenerator ein Zufallszahlengenerator ist, der dazu ausgebildet ist, Zufallszahlencodes zu erzeugen.

17. Anordnung nach Anspruch 16, bei der Authentifizierungsserver dazu ausgebildet ist, die Codes (X, Y) als Textmeldungen zu übertragen und die Kommunikationseinrichtungen (1, 2) Anzeigeeinrichtungen einschließen, die dazu ausgebildet sind, empfangene Codes (X, Y) anzuzeigen.

18. Anordnung nach Anspruch 16, bei der der Authentifizierungsserver dazu ausgebildet ist, die Codes (X, Y) als Datensequenzen zu übertragen, die eine codierte Tonsequenz darstellen, und wo die Kommunikationseinrichtungen (1, 2) Einrichtungen einschließen, die Datensequenzen in Ton umzuwandeln, und ein Lautsprecher angeordnet ist, die Tonmeldung abzuspielen.

19. Anordnung nach einem der Ansprüche 13 bis 18, bei der der Authentifizierungsserver (3) Codeerkennungseinrichtungen, die dazu ausgebildet sind, einen persönlichen Code zu detektieren, der durch eine Person (A, B) mit seiner/ihrer Kommunikationseinrichtung (1, 2) gegeben und zum Authentifizierungsserver (3) übertragen ist, und Einrichtungen einschließt, die dazu ausgebildet sind, von der Speichereinrichtung (5), die mit dem Authentifizierungsserver (3) verbunden ist, eine Identifizierung für die Person mit Hilfe seines/ihres persönlichen Codes abzuleiten.

20. Anordnung nach Anspruch 19, bei der die Codeerkennungseinrichtung dazu ausgebildet ist, persönliche Codes in Form einer Textmeldung zu detektieren.

21. Anordnung nach Anspruch 19, bei der die Codeerkennungseinrichtung Spracherkennungseinrichtungen einschließt, die dazu ausgebildet sind, einen gesprochenen persönlichen Code zu detektieren.

22. Anordnung nach Anspruch 19, bei der die Kommunikationseinrichtungen (1, 2) Spracherkennungseinrichtungen einschließen, die dazu ausgebildet sind, einen gesprochenen persönlichen Code zu delektieren.

23. Anordnung nach einem der Ansprüche 13 bis 18, bei der der Authentifizierungsserver (3) Sprachenerkennungseinrichtungen einschließt, die dazu ausgebildet sind, eine Person (A, B) aufgrund seiner/ihrer Stimme zu erkennen.

24. Anordnung nach einem der Ansprüche 13 bis 23, bei der die Kommunikationseinrichtungen (1, 2) mobile Telefone sind, wobei die Anzeigeneinrichtungen Anzeigen sind.

## Revendications

1. Procédé d'authentification de personnes lors d'une communication entre une première personne (A) et une deuxième personne (B), comprenant les étapes telles que :
lorsqu'une authentification mutuelle de personne à personne est souhaitée, l'une (A) des personnes transmet une demande d'authentification au serveur d'authentification (3), ladite demande d'authentification comportant une identification de la deuxième personne (B) ;
les personnes (A, B) s'identifient elles-mêmes sur le serveur d'authentification (3) au moyen de codes personnels et/ou de signatures vocales ;
un serveur d'authentification (3) produit de deux codes (X, Y) en réponse à une identification correcte, par le serveur d'authentification, des deux personnes indiquées dans ladite demande d'authentification reçue préalablement par le serveur d'authentification ;
les deux codes (X, Y) sont transmis à la première personne (A) et à la deuxième personne (B) ;
la première personne (A) lit à haute voix l'un des codes (X) à la deuxième personne (B), et la deuxième personne (B) lit à haute voix l'autre code (Y) à la première personne (A) ;
les personnes en communication (A, B) s'authentifient l'une par rapport à l'autre en comparant le code qui leur a été lu à haute voix avec le code transmis correspondant.

2. Procédé selon la revendication 1, dans lequel ladite identification comporte des informations concernant l'endroit où (2) les codes (X, Y) doivent être transmis afin d'atteindre la deuxième personne (B).

3. Procédé selon la revendication 3, dans lequel ladite identification est utilisée par le serveur d'authentification (3) afin de produire les informations concernant l'endroit où (2) les codes (X, Y) doivent être transmis afin d'atteindre la deuxième personne.

4. Procédé selon l'une quelconque des revendications précédentes, dans lequel lesdits codes (X, Y) sont transmis au dispositif de communication (1, 2) des personnes (A, B) respectives.

5. Procédé selon la revendication 4, dans lequel lesdits codes (X, Y) sont transmis sous la forme d'un message textuel, et sont présentés/montrés sur un dispositif d'affichage au niveau du dispositif de communication (1, 2).

6. Procédé selon la revendication 4, dans lequel lesdits codes (X, Y) sont transmis sous la forme d'une séquence de données qui représente un message sonore codé, lequel message sonore est diffusé par un haut-parleur au niveau du dispositif de communication (1, 2).

7. Procédé selon l'une quelconque des revendications précédentes, dans lequel lesdites personnes (A, B), avant que les codes (X, Y) leur soient transmis, doivent s'identifier eux-mêmes sur le serveur d'authentification (3), et reconnus par le serveur d'authentification (3).

8. Procédé selon la revendication 7, dans lequel lesdites personnes (A, B) s'identifient elles-mêmes sur le serveur d'authentification (3) en transmettant un code.

9. Procédé selon la revendication 8, dans lequel ledit code est transmis sous la forme d'un message textuel.

10. Procédé selon la revendication 8, dans lequel ledit code (X, Y) est prononcé par la personne (A, B) avec son dispositif de communication (1, 2) et est détecté par un dispositif de reconnaissance vocale en coopération avec le serveur d'authentification (3).

11. Procédé selon la revendication 7, dans lequel un dispositif de reconnaissance vocale en coopération avec le serveur d'authentification (3) identifie lesdites personnes (A, B).

12. Procédé selon l'une quelconque des revendications précédentes, dans lequel lesdits dispositifs de communication (1, 2) sont des téléphones mobiles, lesdits codes étant transmis sur un système de téléphonie mobile (4) auxdits téléphones mobiles (1, 2) au moyen desquels lesdites personnes (A, B) communiquent.

13. Agencement d'authentification de personnes lors d'une communication entre une première personne (A) et une deuxième personne (B), lesdites personnes communiquant l'un avec l'autre par l'intermédiaire d'un dispositif de communication respectif (1, 2) sur un système de communication (4), **caractérisé par** un serveur d'authentification (3) agencé dans le système de communication, lequel serveur d'authentification comporte un port d'entrée agencé de manière, à partir de l'une (A) desdites personnes, à recevoir une demande d'authentification comportant une identification desdites personnes (A, B), le serveur d'authentification (3) étant agencé de manière à contrôler les identités des personnes (A, B) au moyen de codes personnels et/ou de signatures vocales, un générateur de code en relation avec ledit port d'entrée, agencé de manière à produire, en réponse à une demande d'authentification reçue, deux codes (X, Y), et par des dispositifs de distribution en relation avec un port de sortie, agencé de manière à transmettre, par l'intermédiaire dudit système de communication (4), lesdits deux codes (X, Y) auxdits deux dispositifs de communication (1, 2), lesdites personnes en communication (A, B) s'authentifiant l'une par rapport à l'autre en comparant un code lu à haute voix avec un code correspondant transmis à leurs dispositifs de communication (1, 2).

14. Agencement selon la revendication 13, dans lequel ladite demande d'authentification comporte une identification des adresses dudit dispositif de communication (1, 2).

15. Agencement selon la revendication 13, dans lequel ledit serveur d'authentification (3) est relié à un dispositif de mémorisation (5), ledit dispositif de mémorisation mémorisant les identifications des personnes ensemble avec les adresses de communication associées des personnes respectives, et dans lequel le serveur d'authentification (3) comporte, en outre, des moyens agencés de manière à sélectionner, en réponse à une demande d'authentification reçue, une adresse de communication à partir du dispositif de mémorisation (5) en fonction de l'identification reçue.

16. Agencement selon l'une quelconque des revendications 13 à 15, dans lequel ledit générateur de code est un générateur de nombre aléatoire agencé afin de produire des codes à nombre aléatoire.

17. Agencement selon la revendication 16, dans lequel ledit serveur d'authentification est agencé afin de transmettre lesdits codes (X, Y) sous la forme de messages textuels, et lesdits dispositifs de communication (1, 2) comportent des dispositifs d'affichage agencés de manière à afficher les codes (X, Y) reçus.

18. Agencement selon la revendication 16, dans lequel ledit serveur d'authentification est agencé afin de transmettre lesdits codes (X, Y) sous la forme de séquences numériques représentant un message sonore codé, et dans lequel lesdits dispositifs de communication (1, 2) comportent des dispositifs destinés à convertir lesdites séquences numériques en son, et un haut-parleur est agencé de manière à diffuser le message sonore.

19. Agencement selon l'une quelconque des revendications 13 à 18, dans lequel ledit serveur d'authentification (3) comporte des dispositifs de reconnaissance de code, adaptés afin de détecter un code personnel donné et transmis au serveur d'authentification (3) par une personne (A, B) avec son dispositif de communication (1, 2), et des dispositifs agencés de manière à déduire, à partir dudit dispositif de mémorisation (5) raccordé au serveur d'authentification (3), une identification de la personne au moyen de son code personnel.

20. Agencement selon la revendication 19, dans lequel ledit dispositif de reconnaissance de code est agencé de manière à détecter des codes personnels sous la forme de message textuel.

21. Agencement selon la revendication 19, dans lequel ledit dispositif de reconnaissance de code comporte des dispositifs de reconnaissance vocale agencés de manière à détecter un code personnel prononcé.

22. Agencement selon la revendication 19, dans lequel lesdits dispositifs de communication (1, 2) comportent des dispositifs de reconnaissance vocale agencés de manière à détecter un code personnel prononcé.

23. Agencement selon l'une quelconque des revendications 13 à 18, dans lequel ledit serveur d'authentification (3) comporte des dispositifs de reconnaissance vocale adaptés de manière à identifier une personne (A, B) sur la base de sa voix.

24. Agencement selon l'une quelconque des revendications 13 à 23, dans lequel lesdits dispositifs de communication (1, 2) sont des téléphones mobiles, lesdits dispositifs d'affichage étant des écrans d'affichage.
